# EUROPÄISCHE PATENTANMELDUNG

(11) **EP 3 995 719 A1**
(43) Veröffentlichungstag der Anmeldung: **11.05.2022**
(21) Anmeldenummer: 20206706.2
(22) Anmeldetag: 10.11.2020
(51) Int. Cl.: F16G 3/08

(54) **VERBINDUNG ZWEIER ENDEN EINES GURTS ODER EINES ENDES EINES GURTS UND EINES ENDES EINES ANDEREN GURTS, VERBINDER ZUR HERSTELLUNG EINER SOLCHEN VERBINDUNG SOWIE VORRICHTUNG ZUR HERSTELLUNG EINER SOLCHEN VERBINDUNG**

(71) Anmelder: MATO GmbH & Co. KG, 63165 Mühlheim am Main (DE)
(72) Erfinder: FRIEß, Michael, 63456 Hanau (DE); WILK, Thomas, 63165 Mühlheim (DE)
(74) Vertreter: Franke, Markus

(57) **Zusammenfassung**

Die vorliegende Erfindung betrifft eine Verbindung zweier Enden (2, 3) eines Gurts (1), oder eines Endes (2) eines Gurts (1) und eines Endes (2) eines anderen Gurts (1), wobei ein erstes Ende (2) der zwei Enden (2, 3) einen stufenförmigen und/oder keilförmigen ersten Verbindungsabschnitt und ein zweites Ende (3) der zwei Enden (2, 3) einen zu dem ersten Verbindungsabschnitt korrespondierenden stufenförmigen und/oder keilförmigen zweiten Verbindungsabschnitt aufweist, wobei die zwei Verbindungsabschnitte in einem Überlappungsbereich überlappend angeordnet sind, wobei in dem Überlappungsbereich mehrere Verbinder (6) angeordnet sind, wobei der jeweilige Verbinder (6) den ersten Verbindungsabschnitt und den zweiten Verbindungsabschnitt durchsetzt, wobei der jeweilige Verbinder (6) einen ersten Grundkörperabschnitt und einen zweiten Grundkörperabschnitt aufweist, wobei die beiden Verbindungsabschnitte zwischen den beiden Grundkörperabschnitten angeordnet sind, wobei der jeweilige Verbinder (6) zumindest zwei Verbindungsmittel aufweist, wobei die zumindest zwei Verbindungsmittel in dem ersten und dem zweiten Grundkörperabschnitt gehalten sind und den ersten und den zweiten Verbindungsabschnitt durchsetzen. Ferner betrifft die Erfindung einen Verbinder (6) zur Herstellung einer solchen Verbindung sowie eine Vorrichtung zur Herstellung einer solchen Verbindung.

## Beschreibung

Die vorliegende Erfindung betrifft eine Verbindung zweier Enden eines Gurts, insbesondere eines Fördergurts, oder eine Verbindung eines Endes eines Gurts und eines Endes eines anderen Gurts. Bei den beiden Gurten kann es sich beispielsweise um Fördergurte handeln. Ferner betrifft die Erfindung einen Verbinder zur Herstellung einer solchen Verbindung sowie eine Vorrichtung zur Herstellung einer solchen Verbindung. Die Verbindung dient insbesondere dazu, die Enden eines Gurts oder mehrerer Gurte derart zu verbinden, dass ein Endlosgurt gebildet ist.

Eine bekannte Verbindung von Enden derartiger Gurte erfolgt mittels einer Stufenverbindung, wobei zu diesem Zweck die Bandenden zueinander korrespondierende stufenförmige Verbindungsabschnitte aufweisen oder entsprechend korrespondierende stufenförmige Verbindungsabschnitte eingebracht werden, die überlappend angeordnet werden, wobei im Überlappungsbereich der beiden Verbindungsabschnitte ein Stoffschluss zwischen den beiden Verbindungsabschnitten hergestellt wird, beispielsweise mittels Vulkanisierens oder mittels Verkleben, sodass die beiden Verbindungsabschnitte und somit die Bandenden anschließend stoffschlüssig miteinander verbunden sind. Nachteilig bei einer stoffschlüssigen Verbindung der beiden Verbindungsabschnitten ist, dass die beiden Verbindungsabschnitte eine recht große Kontaktfläche, beispielsweise eine recht große Ausdehnung in Längsrichtung des Gurts, aufweisen müssen, um eine ausreichende Zugfestigkeit zu gewährleisten. Zudem ist die Herstellung einer ausreichend zugfesten, stoffschlüssigen Verbindung sehr zeitaufwendig. So muss zur Gewährleistung einer ausreichenden Zugfestigkeit sehr sorgfältig gearbeitet werden. Insbesondere muss beim Herstellen der Verbindungsabschnitte sowie beim Aufbringen des Klebstoffs und/oder beim Vulkanisieren sehr sorgfältig gearbeitet werden, um eine ausreichend zugfeste Verbindung zu erreichen. Beispielsweise muss sehr sauber gearbeitet werden, um eine Verunreinigung der Verbindungsflächen, die sich negativ auf die Stabilität der Verbindung auswirken würde, zu vermeiden Dies ist insbesondere problematisch, wenn wenig geschultes Personal, Laien oder Endverbraucher, bspw. ein Landwirt, das Verbinden der Gurtenden vornimmt bzw. vornehmen muss, bspw. im Rahmen eines Austausches des Gurts einer Maschine oder einer Reparatur des Gurts.

Aus der DE 741 665 A ist ein Keilriemen mit Stufenverbindung bekannt, wobei zusätzlich Nieten oder Bolzen vorgesehen sind.

Aus der DE 10 2011 116 633 A1 ist ein Riemen als Zugmittel für Förderbänder landwirtschaftlicher Maschinen bekannt, dessen Enden eine obere Stufe bzw. eine untere Stufe aufweisen, die in einem Überlappungsbereich aufeinanderliegen und durch Verschraubung, Vernietung oder Nachvulkanisation zugfest miteinander verbunden sind.

Aufgabe der vorliegenden Erfindung ist es, eine Verbindung zweier Enden eines Gurts oder eines Endes eines Gurts und eines Endes eines anderen Gurts zu schaffen, die besonders einfach herstellbar ist und sich durch eine besonders hohe Kraftübertragung bei dennoch relativ geringem Überlappbereich in Laufrichtung des Gurts und eine besonders lange Haltbarkeit auszeichnet. Ferner ist es Aufgabe der Erfindung, einen Verbinder zur Herstellung einer solchen Verbindung zu schaffen. Des Weiteren ist es Aufgabe der Erfindung, eine Vorrichtung zu schaffen, die zur Herstellung einer solchen Verbindung geeignet ist.

Diese Aufgaben werden durch eine Verbindung gemäß Patentanspruch 1, einen Verbinder gemäß Patentanspruch 11 und eine Vorrichtung gemäß Patentanspruch 15 gelöst.

Bei der erfindungsgemäßen Verbindung handelt es sich um eine Verbindung zweier Enden eines Gurts, insbesondere eines Fördergurts, oder eines Endes eines Gurts und eines Endes eines anderen Gurts, insbesondere der Enden zweier Fördergurte. Bei dem Gurt bzw. den Gurten handelt es sich insbesondere um einen Mehrlagengurt bzw. um Mehrlagengurte. Die erfindungsgemäße Verbindung findet insbesondere bei Fördergurten und Gurten landwirtschaftlicher Maschinen, bspw. einem Ballenpress-Gurt, Anwendung.

Die Verbindung dient insbesondere dem Verbinden eines Endes eines Gurts mit einem anderen Ende desselben Gurts. Es ist aber auch denkbar, mittels der Verbindung das Ende eines Gurts mit dem Ende eines anderen Gurts zu verbinden.

Ein erstes Ende der zwei Enden weist einen stufenförmigen und/oder keilförmigen ersten Verbindungsabschnitt auf und ein zweites Ende der zwei Enden weist einen zu dem ersten Verbindungsabschnitt korrespondierenden stufenförmigen und/oder keilförmigen zweiten Verbindungsabschnitt auf. Es ist durchaus denkbar, dass die Verbindungsabschnitte weitere zueinander korrespondierende Strukturen aufweisen, beispielsweise wellenartige Strukturen und/oder Verzahnungen und/oder einen oder mehrere Schrägschnitte. Die zwei Verbindungsabschnitte sind in einem Überlappungsbereich überlappend angeordnet. Erfindungsgemäß ist vorgesehen, dass in dem Überlappungsbereich mehrere Verbinder angeordnet sind, wobei der jeweilige Verbinder den ersten Verbindungsabschnitt und den zweiten Verbindungsabschnitt durchsetzt. Der jeweilige Verbinder weist einen ersten Grundkörperabschnitt und einen zweiten Grundkörperabschnitt auf. Die beiden Verbindungsabschnitte sind dabei zwischen den beiden Grundkörperabschnitten angeordnet, wobei der jeweilige Verbinder zumindest zwei Verbindungsmittel aufweist, wobei die zumindest zwei Verbindungsmittel in dem ersten und dem zweiten Grundkörperabschnitt gehalten sind und den ersten und den zweiten Verbindungsabschnitt durchsetzen.

Unter dem Begriff Gurt wird vorliegend insbesondere ein Fördergurt verstanden. Bei dem Gurt kann es sich allerdings auch um Band, insbesondere um ein Förderband handeln.

Bei dem Gurt handelt es sich insbesondere um einen Mehrlagengurt, insbesondere um einen Mehrlagenfördergurt. Der Mehrlagengurt kann eine obere Deckschicht und eine untere Deckschicht und zumindest eine zwischen den Deckschichten ausgebildete Zwischenlage aufweisen. Bei der zumindest einen Zwischenlage kann es sich beispielsweise um eine Karkasse, eine Zwischengummierung, einen Zugzwischenträger, ein Textil, eine Skimschicht und/oder ein Gewebe, insbesondere eine Gewebe mit Polyester für Kettfäden und Polyamid, auch bekannt unter dem Handelsnamen Nylon, für Schussfäden, ein EP-Gewebe, ein EPP-Gewebe, ein PEP-Gewebe oder ein Gewebe aus Polyester und Polyamid-Einlagen, handeln. Die obere und/oder untere Deckschicht besteht insbesondere aus einem elastischen Material oder weist ein solches auf. Die obere und/oder untere Deckschicht besteht insbesondere aus einem Kautschuk oder weist Kautschuk auf.

Die Verbindungsabschnitte sind insbesondere derart gestaltet, dass im Überlappungsbereich Zugträger an Zugträger und/oder Gewebe an Gewebe und/oder Karkasse an Karkasse anliegen.

Als besonders vorteilhaft wird es angesehen, wenn Stoßenden der Verbindungsabschnitte schräg ausgebildet sind, insbesondere als Schrägschnitt ausgebildet sind. Der schräge Stoß bewirkt, dass die Verbindung des Gurts/der Gurte bei einer Umlenkung an Trommeln und/oder Rollen nicht gleichzeitig über die gesamte Gurtbreite beansprucht wird. Je größer der Schrägungswinkel desto geringer ist der Anteil der Stoßenden, die bei Umlenkung beansprucht werden und umso größer ist die Gesamtlänge des jeweiligen Stoßendes. Unter einem Schrägungswinkel wird vorliegend der Winkel verstanden, der von der Breitenrichtung des Gurts und dem Stoßende eingeschlossen wird. Ein Stoßende, das parallel zu der Breitenrichtung des Gurts ausgebildet ist, weist einen Schrägungswinkel von 0° auf. Die Abmessung des Stoßendes wäre bei einem Schrägungswinkel von 0° minimal. Vorzugsweise weist der Schrägungswinkel einen Wert von 10° bis 70°, bevorzugt von 10° bis 18° auf. Es ist aber auch durchaus denkbar und bevorzugt, dass der Schrägungswinkel einen Wert von 40° bis 50°, insbesondere von 45°, aufweist. Ein solcher Schrägungswinkel ist besonders einfach herstellbar. Beispielsweise kann ein rechtwinkliges gleichschenkliges Dreieck abgemessen werden, dessen Schenkellänge jeweils der Breite des Gurts entspricht. Der Schrägschnitt erfolgt dann entlang der Hypotenuse.

Insbesondere bei besonders kleinen Trommel-/Rollendurchmessern sind auch V-förmige oder mehrfach V-förmige Stoßenden denkbar.

Durch die Verwendung mehrerer Verbinder, die jeweils mehrere Verbindungsmittel aufweisen, kann eine besonders hohe Kraftübertragung bei dennoch geringem Überlappungsbereich der beiden Enden in Laufrichtung des Gurts erreicht werden. Ferner hat sich gezeigt, dass eine solche Verbindung eine besonders hohe Lebensdauer selbst bei hoher mechanischer Belastung aufweist.

Dadurch, dass der jeweilige Verbinder einen ersten Grundkörperabschnitt und einen zweiten Grundkörperabschnitt aufweist, in denen jeweils die mehreren Verbindungsmittel, die die Verbindungsabschnitte durchsetzen, gelagert sind, erfolgt eine besonders günstige Kraftführung bei Einleiten einer Zugkraft in den verbundenen Gurt bzw. in die verbundenen Gurte, sodass im Bereich der Verbindung auftretende Kräfte, insbesondere Scherkräfte, besonders gut aufgenommen bzw. in den Gurt bzw. die Gurte eingeleitet werden. Dadurch ist eine besonders stabile Verbindung im Bereich der beiden Enden gewährleistet.

Aufgrund der Verwendung von mehreren Verbindern und insbesondere aufgrund der Gestaltung des Verbinders mit zwei Grundkörperabschnitten, kann die Verbindung einen besonders flachen Aufbau aufweisen, da die Materialstärke der Komponenten der Verbinder besonders gering sein kann.

Bevorzugt beträgt die maximale Erstreckung, insofern eine Längserstreckung, des Grundkörperabschnitts weniger als 50% einer Breite des Gurts, wodurch eine Verformung des Gurts, wie sie beispielsweise an einer Umlenkrolle stattfindet, durch die Verbinder nur in geringem Maße beeinträchtigt wird, was sich wiederum vorteilhaft auf die Dauerfestigkeit bzw. Lebensdauer der Verbindung auswirkt. Somit bleibt der Gurt bei einer solchen Ausführungsform besonders flexibel, insbesondere auch quer zur Laufrichtung. Die Breite ist dabei die Erstreckung des Gurts senkrecht zu einer Laufrichtung des Gurts und senkrecht zu einer Dicke des Gurts, wobei die Dicke des Gurts die Erstreckung des Gurts von einer Außenfläche zu der gegenüberliegenden Außenfläche ist. Besonders bevorzugt beträgt die Längserstreckung weniger als 30% einer Breite des Gurts. Insbesondere beträgt die Längserstreckung zwischen 10% und 30% der maximalen Erstreckung des Gurts.

Vorzugsweise sind die Verbinder voneinander beabstandet angeordnet. Dadurch wird trotz der Verbinder der Gurt nur in geringem Maße versteift und eine Verformung des Gurts, wie sie beispielsweise an einer Umlenkrolle stattfindet, durch die Verbinder nur in geringem Maße beeinträchtigt, was sich wiederum vorteilhaft auf die Dauerfestigkeit bzw. Lebensdauer der Verbindung auswirkt. Somit bleibt der Gurt bei einer solchen Ausführungsform besonders flexibel, insbesondere auch quer zur Laufrichtung. Der minimale Abstand zwischen zwei benachbarten Verbindern beträgt vorzugsweise zumindest 10% der Längserstreckung des Grundkörperabschnitts. Bevorzugt beträgt der minimale Abstand zwischen zwei benachbarten Verbindern zwischen 10% und 50% der Längserstreckung des Grundkörperabschnitts eines der Verbinder.

Vorzugsweise liegen die beiden Grundkörperabschnitte an gegenüberliegenden Außenflächen des Gurts an.

Hinsichtlich der Stabilität der Verbindung sind die beiden Grundkörperabschnitte des Verbinders auch dahingehend als vorteilhaft anzusehen, dass die beiden Grundkörperabschnitte im Gegensatz zu dem Verbindungsmittel und im Gegensatz zu üblichen Nieten oder Bolzen, die im Wesentlichen stiftförmig ausgebildet sind, eine verhältnismäßig große Erstreckung bzw. Fläche senkrecht zu der Dicke des Gurts aufweisen, sodass beim Herstellen der Verbindung oder bei Verwendung des Gurts vermieden wird, dass die beiden Grundkörperabschnitte oder einer der Grundkörperabschnitte in das Material des Gurts derart hineingedrückt wird, dass eine die Außenfläche des Gurts bildende Deckschicht beschädigt wird, was sich unvorteilhaft auf die Eigenschaften des Gurts auswirken kann, insbesondere wenn die Deckschicht des Gurts dem Korrosionsschutz dient und/oder dem Schutz eines zu fördernden Guts vor Verunreinigungen dient.

Es ist aber durchaus denkbar und vorteilhaft, wenn zumindest einer der Grundkörperabschnitte, vorzugsweise beide Grundkörperabschnitte, unter Verformung des Gurts, insbesondere unter Verformung der Deckschicht, in den Gurt hineingepresst sind. Dadurch wird ein besonders flacher Aufbau erzielt. Zudem sind der Grundkörperabschnitt bzw. die Grundkörperabschnitte bei einer solchen Ausführungsform besonders gut vor äußeren Krafteinwirkungen, insbesondere von Umlenkrollen, geschützt.

Es ist auch durchaus denkbar, dass die Verbindungsabschnitte, insbesondere im Bereich der Deckschicht, Ausnehmungen zur Aufnahme der Grundkörperabschnitte aufweisen.

Bei dem Gurt handelt es sich insbesondere um einen Fördergurt, insbesondere um einen Mehrlagenfördergurt. Vorzugsweise handelt es sich bei dem Fördergurt um einen Fördergurt, insbesondere um einen Mehrlagenfördergurt, für landwirtschaftliche Maschinen, beispielsweise um einen Fördergurt für eine Ballenpresse.

Als besonders vorteilhaft wird es angesehen, wenn das Verbindungsmittel formschlüssig in zumindest einem der Grundkörperabschnitte gehalten ist. Vorzugsweise ist das Verbindungsmittel formschlüssig in dem jeweiligen Grundkörperabschnitt gehalten. Es wird als vorteilhaft angesehen, wenn das Verbindungsmittel durch eine Materialumformung des Verbindungsmittels, insbesondere durch einen Schließkopf, in zumindest einem der Grundkörperabschnitte gehalten ist. Das Verbindungsmittel ist insbesondere als Stift, Niet oder Bolzen ausgebildet. Vorzugsweise ist das Verbindungsmittel durch eine erste Materialumformung des Verbindungsmittels, insbesondere durch einen ersten Schließkopf, in dem ersten Grundkörperabschnitt gehalten und durch eine zweite Materialumformung des Verbindungsmittels, insbesondere durch einen zweiten Schließkopf, in dem zweiten Grundkörperabschnitt gehalten. Vorzugsweise sind der erste und der zweite Schließkopf an gegenüberliegenden Enden des Verbindungsmittels ausgebildet.

Vorzugsweise wird die jeweilige Materialumformung, insbesondere der jeweilige Schließkopf, bei der Herstellung der Verbindung an dem Verbindungsmittel ausgebildet. Dementsprechend weisen die Verbindungmittel des jeweiligen Verbinders bei einer solchen Ausführungsform vor der Herstellung der Verbindung noch keine Materialumformung auf.

Es ist aber auch durchaus denkbar, dass das Verbindungsmittel ein Gewinde aufweist, beispielsweise als Schraube ausgebildet ist, und zumindest einer, vorzugsweise genau einer, der Grundkörperabschnitte ein zu dem Gewinde korrespondierendes Gegengewinde aufweist, wobei das Verbindungsmittel in das Gegengewinde des Grundkörperabschnitts eingeschraubt ist.

Es wird als vorteilhaft angesehen, wenn der erste Grundkörperabschnitt und/oder der zweite Grundkörperabschnitt auf der den Verbindungsabschnitten abgewandten Seite gegenüber einem jeweiligen Ende der zumindest zwei Verbindungsmittel hervorsteht oder bündig mit diesem abschließt. Dadurch wird vermieden, dass mit dem Gurt transportierte Güter oder Materialien unmittelbar auf das Verbindungsmittel einwirken, wodurch eine Beschädigung des Verbindungsmittels vermieden wird. Insofern ist das Verbindungsmittel bei einer derartigen Gestaltung besonders gut gegen äußere mechanische Einflüsse geschützt.

Als besonders vorteilhaft wird es angesehen, wenn der Gurt mehrere, somit zumindest zwei, Lagen aufweist, insbesondere der Gurt als Mehrlagenfördergurt ausgebildet ist. Bei mehreren Lagen kann eine besonders hohe Stabilität der Verbindung erreicht werden, insbesondere wenn eine der Lage, vorzugsweise eine innere Lage, insofern eine Zwischenlage, durch ein Gewebe gebildet ist. Vorzugsweise durchdringt das Verbindungsmittel sowohl eine innere Lage des ersten Verbindungsabschnitts als auch eine innere Lage des zweiten Verbindungsabschnitts. Vorzugsweise handelt es sich bei der jeweiligen Zwischenlage um ein Gewebe.

Es wird als besonders vorteilhaft angesehen, wenn bei einem stufenförmigen Verbindungsabschnitt dieser derart ausgebildet ist, dass die Stufen jeweils durch eine freigelegte Lage des Mehrlagenfördergurts gebildet sind.

Vorzugsweise liegt im Überlappungsbereich zwischen den Verbindungsabschnitten kein Stoffschluss zwischen den Verbindungsabschnitten vor. Es hat sich überraschenderweise gezeigt, dass die erfindungsgemäße Verbindung auch ohne einen Stoffschluss, insbesondere auch ohne Verkleben oder Vulkanisieren der Verbindungsabschnitte, eine ausreichende Zugfestigkeit und Dauerfestigkeit aufweist. Eine derartige Ausführungsform ist besonders vorteilhaft, wenn eine Reparatur des Gurts oder eine Herstellung der Gurtverbindung in schwer zugänglichen Bereichen erfolgen muss, insbesondere in Bereichen, bei denen keine Großgeräte zum Verkleben oder Vulkanisieren in einfacher Art und Weise zur Verfügung stehen. Auch für den Endanwender, beispielsweise einem Landwirt, ist das Herstellen einer Verbindung ohne Stoffschluss einfacher möglich, da eine rein mechanische Verbindung mit den Verbindern in einfacher Art und Weise herstellbar ist. Insbesondere kann der Herstellungsprozess weitestgehend unabhängig von Trocknungszeiten und/oder der Witterung erfolgen.

Die Verbinder sind auch bei einer zusätzlichen stoffschlüssigen Verbindung als vorteilhaft anzusehen, da durch die mechanischen Verbinder die Belastung der stoffschlüssigen Verbindung verringert wird. Zudem bieten die Verbinder eine zusätzliche Sicherheit, bei einem Verschleiß oder einer Verminderung der Stabilität der stoffschlüssigen Verbindung. Dies ist insbesondere dahingehend von Vorteil, dass ein Verlust der Stabilität der stoffschlüssigen Verbindung nur schwer zu erkennen ist. Selbst bei Verlust der stoffschlüssigen Verbindung kann der Gurt zumindest übergangsweise weiterverwendet werden. Es ist auch durchaus denkbar, bei einem beginnenden Lösen der stoffschlüssigen Verbindung von Gurtenden die bestehende Verbindung durch Einbringen von Verbindern zu verstärken, um ein vollständiges Lösen der Verbindung zu vermeiden.

Insbesondere ist vorgesehen, dass die Grundkörperabschnitte in Querrichtung des Gurts, somit in Breitenrichtung des Gurts, eine größere Erstreckung aufweisen als in Längsrichtung des Gurts, wobei die Längsrichtung des Gurts durch die Laufrichtung des Gurts definiert ist.

Als besonders vorteilhaft wird es angesehen, wenn die Verbindungsmittel eines Verbinders entlang einer Geraden angeordnet sind, insbesondere entlang einer Hauptausdehnungsrichtung, insbesondere einer Längsrichtung, der Grundkörperabschnitte.

Vorzugsweise sind die Verbindungsmittel in Längsrichtung der Grundkörperabschnitte hintereinander angeordnet.

Vorzugsweise weist der Verbinder lediglich eine einzige Reihe von Verbindungsmitteln auf.

Vorzugsweise weist der Verbinder zwei bis zehn, bevorzugt zwei bis acht, besonders bevorzugt zwei bis sechs Verbindungsmittel auf.

Insbesondere ist vorgesehen, dass die Verbindungsmittel eines Verbinders im Wesentlichen entlang der Querrichtung des Gurts angeordnet sind oder entlang der Querrichtung des Gurts angeordnet sind, vorzugsweise in einem Winkel von 0° bis 20° zur Querrichtung des Gurts angeordnet sind. Dadurch wird ein Umlenken des Gurts über eine Umlenkrolle ermöglicht, da der Gurt in Längsrichtung kaum versteift ist durch die Verbinder.

Ferner wird es aus demselben Grund als vorteilhaft angesehen, wenn der Verbinder derart angeordnet ist, dass die Hauptausdehnungsrichtung der Grundkörperabschnitte im Wesentlichen entlang der Querrichtung des Gurts angeordnet sind oder entlang der Querrichtung des Gurts, vorzugsweise in einem Winkel von 0° bis 20° zur Querrichtung des Gurts, ausgebildet ist.

In einer bevorzugten Ausführungsform ist vorgesehen, dass die Verbindung zumindest zwei Reihen von Verbindern, vorzugsweise zumindest zwei parallele Reihen von Verbindern, aufweist, wobei die jeweilige Reihe zumindest zwei Verbinder aufweist. Vorzugsweise sind die Reihen in einem Winkel von 0° bis 20° zur Querrichtung des Gurts ausgebildet.

Es ist durchaus denkbar, dass die Verbinder V-förmig angeordnet sind.

Vorzugsweise sind die Reihen in Laufrichtung des Gurts beabstandet.

Es ist auch durchaus denkbar, dass bei der Verbindung zusätzlich auch Verbinder mit nur einem Verbindungsmittel vorhanden sind.

Der erfindungsgemäßen Verbinder ist zur Herstellung einer Verbindung nach einem der vorgenannten Aspekte geeignet. Die zu der Verbindung genannten Merkmale des Verbinders gelten für den Verbinder als solchen entsprechend und umgekehrt gelten die zu dem Verbinder genannten Merkmale für die Verbindung als solche entsprechend.

Vorzugsweise weist der Verbinder einen ersten Grundkörperabschnitt und einen zweiten Grundkörperabschnitt auf, wobei die beiden Verbindungsabschnitte der zu verbindenden Enden des Gurts oder der Gurte zwischen den beiden Grundkörperabschnitten überlappend anordenbar sind, wobei der Verbinder ferner zumindest zwei Verbindungsmittel aufweist, wobei die zumindest zwei Verbindungsmittel in dem ersten Grundkörperabschnitt gelagert sind und unter Durchsetzen der zwischen den beiden Grundkörperabschnitten anordenbaren Verbindungsabschnitte mit dem zweiten Grundkörperabschnitt verbindbar sind.

In einer bevorzugten Ausführungsform des Verbinders weist zumindest einer der Grundkörperabschnitte im Bereich einer umlaufenden Kante zumindest zwei Ausnehmungen, vorzugsweise zwei bezüglich der Verbindungsmittel gegenüberliegende Ausnehmungen, auf, zur Aufnahme von Lagermitteln zum Lagern des Grundkörperabschnitts, insbesondere zwecks Positionierung und Ausrichtung des jeweiligen Grundkörperabschnitts vor dem Verbinden des Verbinders mit dem Gurt. Dies ist besonders vorteilhaft in Hinblick auf das Herstellen der Verbindung mittels eines solchen Verbinders. Da der Verbinder zwecks Herstellens der Verbindung vorzugsweise besonders exakt bezüglich des Überlappungsbereichs ausgerichtet werden sollte und insbesondere auch die beiden Grundkörperabschnitte besonders exakt gegenüberliegend ausgerichtet werden sollten, erleichtert eine solche Gestaltung das Herstellen der Verbindung. Dies insbesondere dann, wenn die Verbindungsmittel als Nieten oder Bolzen oder Schraube ausgebildet sind, die in zumindest einen der Grundkörperabschnitte einzutreiben sind. Die Ausnehmungen können in Lagermittel einer Vorrichtung zum Lagern des Grundkörperabschnitts eingeführt werden. Aufgrund der Lagermittel wird vermieden, dass beim Anordnen der Verbindungsabschnitte und/oder beim Einbringen der Verbindungsmittel sich die Position bzw. Ausrichtung der Grundkörperabschnitt bzw. der Grundkörperabschnitte unbeabsichtigt ändert.

Die Grundkörperabschnitte sind vorzugsweise plattenförmig, insbesondere streifenförmig, ausgebildet. Vorzugsweise handelt es sich bei dem Grundkörperabschnitt um ein Stanzteil aus Blech. Dabei ist es durchaus denkbar, dass das Blech oder das Stanzteil lokal verformt und/oder bearbeitet wird, beispielsweise ein Bohrloch und/oder eine Fase für den Schließkopf und/oder radial außen Fasen eingebracht werden.

Vorzugsweise weist der jeweilige Grundkörperabschnitt eine größere Längserstreckung als Breitenerstreckung auf. Dadurch ist eine besonders hohe Stabilität bei dennoch geringer Versteifung der Verbindung begünstigt. Die Breitenerstreckung beträgt vorzugsweise weniger als 50% der Längserstreckung, bevorzugt zwischen 10% und 50% der Längserstreckung, besonders bevorzugt zwischen 20% und 40% der Längserstreckung.

Vorzugsweise weist der jeweilige Grundkörperabschnitt eine Materialstärke von 1 mm bis 2 mm, insbesondere eine Materialstärke von 1,3 mm bis 1,7 mm, besonders bevorzugt eine Materialstärke von 1,5 mm auf. Vorzugsweise beträgt die Längserstreckung des Grundkörperabschnitts 2 cm bis 8 cm.

Vorzugsweise weist das Verbindungsmittel eine maximale Erstreckung, somit eine Längserstreckung, von 1 cm bis 4 cm auf.

Vorzugsweise weist das Verbindungsmittel eine Materialstärke von 1 mm bis 3 mm auf.

Vorzugsweise sind die Verbindungsmittel als Bolzen in Art eines Vollzylinders mit einer kreisförmiger Grundfläche ausgebildet. Der Durchmesser der Bolzen beträgt insbesondere 1 mm bis 3 mm, insbesondere 1,5 mm bis 2,5 mm, besonders bevorzug 2 mm.

Insbesondere weist zumindest einer der Grundkörperabschnitte eine Auflaufkante für Umlenkrollen auf. Durch die vorzugsweise keilförmige Auflaufkante wird eine Beschädigung des Verbinders beim Umlenken des Gurts an einer Umlenkrolle vermieden, da die Umlenkrolle dann relativ sanft über die Auflaufkante und somit dem Grundkörperabschnitt abrollt.

Als besonders vorteilhaft wird es angesehen, wenn das jeweilige Verbindungsmittel einteilig ausgebildet ist, insbesondere das jeweilige Verbindungsmittel, der erste Grundkörperabschnitt und der zweite Grundkörperabschnitt jeweils einteilig ausgebildet sind.

Als besonders vorteilhaft wird es angesehen, wenn der Verbinder ausschließlich aus dem ersten und dem zweiten Grundkörperabschnitt und den Verbindungsmitteln besteht.

Vorzugsweise bestehen das jeweilige Verbindungsmittel und/oder der erste Grundkörperabschnitt und/oder der zweite Grundkörperabschnitt aus einem Metall oder aus einer Metalllegierung.

Vorzugsweise bestehen das jeweilige Verbindungsmittel und/oder der erste Grundkörperabschnitt und/oder der zweite Grundkörperabschnitt aus einem Stahl, insbesondere einem Edelstahl.

Zwecks einer besonders günstigen Herstellung und einer besonders günstigen Lagerhaltung wird es als vorteilhaft angesehen, wenn die Grundkörperabschnitte als separate Teile ausgebildet sind, insbesondere der erste Grundkörperabschnitt, der zweite Grundkörperabschnitt und die Verbindungsmittel als separate Teile ausgebildet sind.

Als besonders vorteilhaft wird es angesehen, wenn, zwecks Herstellens der Verbindung, der erste Grundkörperabschnitt bereits mit den Verbindungsmitteln bestückt ist und der zweite Grundkörperabschnitt ein separates Teil bildet. Dadurch wird die Anordnung der Komponenten des Verbinders bezüglich der Verbindungsabschnitte erleichtert. Vorzugsweise stehen bei einer solchen Ausführungsform die Verbindungsmittel auf einer dem zweiten Grundkörperabschnitt abzuwendenden Seite des ersten Grundkörperabschnitts gegenüber dem ersten Grundkörperabschnitt hervor.

Es wird als vorteilhaft angesehen, wenn der erste Grundkörperabschnitt Lageröffnungen aufweist, wobei das jeweilige Verbindungsmittel kraftschlüssig in einer der Lageröffnungen gelagert ist. Dadurch können der erste Grundkörperabschnitt und die Verbindungsmittel gemeinsam gehandhabt werden, wodurch die Herstellung der Verbindung erleichtert ist. Die Verbindungsmittel sind vorzugsweise in Art einer Presspassung in der jeweiligen Lageröffnung des ersten Grundkörperabschnitts gelagert. Der Vorteil eines Kraftschlusses besteht darin, dass zwecks Herstellens der Verbindung bei ausreichender axialer Krafteinwirkung auf das Verbindungsmittel das Verbindungsmittel weiter in die Lageröffnung hineingetrieben werden kann, um eine Verbindung mit dem zweiten Grundkörperabschnitt herzustellen.

In einer vorteilhaften Weiterbildung ist vorgesehen, dass der zweite Grundkörperabschnitt Aufnahmeöffnungen zum Aufnehmen der Verbindungsmittel aufweist. Es wird als vorteilhaft angesehen, wenn sich die Aufnahmeöffnungen in Richtung des ersten Grundkörperabschnitts erweitern, insbesondere konisch erweitern. Dadurch ist das Herstellen einer Verbindung zwischen dem ersten Grundkörperabschnitt und dem zweiten Grundkörperabschnitt mittels der Verbindungsmittel erleichtert, insbesondere wenn die Verbindungsmittel zwecks Herstellens der Verbindung in Richtung des zweiten Grundkörperabschnitts verschoben werden, da sich aufgrund der in Richtung des ersten Grundkörperabschnitts erweiternden Aufnahmeöffnung eine gewisse Führung für das Verbindungsmittel ergibt.

Vorzugsweise durchsetzt die Lageröffnung bzw. die Aufnahmeöffnung den jeweiligen Grundkörperabschnitt.

Es ist durchaus denkbar, dass die Aufnahmeöffnung das Verbindungsmittel mit Spiel aufnimmt, wodurch ein Einführen des Verbindungsmittels in die Aufnahmeöffnung, insbesondere auch bei nicht exakter Positionierung oder Fertigungstoleranzen, erleichtert ist.

Als besonders vorteilhaft wird es angesehen, wenn das Verbindungsmittel zumindest an einem, vorzugsweise an beiden Enden jeweils einen Umformabschnitt aufweist, zur Bildung eines Schließkopfes beim Umformen des jeweiligen Umformabschnitts.

In einer vorteilhaften Weiterbildung ist vorgesehen, dass der jeweilige Grundkörperabschnitt einen Rücksprung, beispielsweise in Form einer Ausnehmung, insbesondere in Form einer Fase, zur Aufnahme des jeweiligen Schließkopfes aufweist.

Es ist durchaus denkbar, dass der jeweilige Umformabschnitt durch eine Materialschwächung gebildet ist. Bei dieser Materialschwächung kann es sich beispielsweise um einen axialen Rücksprung handeln. Unter dem Aspekt einer besonders einfachen und kostengünstigen Herstellung sowie hohen Stabilität wird es allerdings als besonders vorteilhaft angesehen, wenn das Verbindungsmittel keine Materialschwächung aufweist, sondern vorzugsweise als Bolzen in Art eines Vollzylinders mit einer kreisförmiger Grundfläche ausgebildet. Bei ausreichend hoher Krafteinwirkung kann auch ohne Materialschwächung, insbesondere auch bei einem Vollmaterial, eine Umformung zwecks Bildung eines Schließkopfes erfolgen.

Als besonders vorteilhaft wird es angesehen, wenn der erste Grundkörperabschnitt und der zweite Grundkörperabschnitt eines Verbinders identisch ausgebildet sind. Dadurch werden Herstellungskosten und Lagerhaltungskosten durch Verwendung von Gleichteilen eingespart.

Es ist denkbar, dass das Verbindungsmittel endseitig eine Aufnahme für einen Spreizdorn zwecks Bildung eines Schließkopfes aufweist. Die Aufnahme kann durchaus durch die Materialschwächung des Umformabschnitts gebildet sein. Unter dem Aspekt einer besonders einfachen und kostengünstigen Herstellung und hohen Stabilität wird es allerdings als besonders vorteilhaft angesehen, wenn das Verbindungsmittel keine Aufnahme aufweist, sondern das Verbindungsmittel endseitig eine ebene geschlossene Fläche aufweist. Bei ausreichend hoher Krafteinwirkung kann auch ohne Materialschwächung, insbesondere auch bei einem Vollmaterial, eine Umformung zwecks Bildung eines Schließkopfes erfolgen.

Die erfindungsgemäße Vorrichtung zur Herstellung der Verbindung weist zueinander bewegbare Klemmbacken auf, wobei zwischen den Klemmbacken ein Aufnahmebereich zur klemmenden Aufnahme der Verbindungsabschnitte im Überlappungsbereich der Verbindungsabschnitte ausgebildet ist. Durch die Bewegbarkeit der beiden Klemmbacken zueinander können die Verbindungsabschnitte in besonders einfacher Art und Weise in ihrer Ausrichtung zueinander bzw. in ihrer Anordnung zueinander festgelegt werden, nämlich mittels Zustellen der Klemmbacken zueinander. Eine erste Klemmbacke der zwei Klemmbacken weist Lagerstrukturen zum Lagern der zweiten Grundkörperabschnitte auf. Bei den Lagerstrukturen kann es sich beispielsweise um Lagermittel handeln, die in korrespondierende Ausnehmung des jeweiligen Grundkörperabschnitts eingreifen, oder die Lagerstrukturen weisen entsprechende Lagermittel auf. Die Vorrichtung weist ferner ein Umformwerkzeug zum Umformen eines Endes der Verbindungsmittel auf. Eine zweite Klemmbacke der zwei Klemmbacken weist zumindest eine, vorzugsweise mehrere, diese Klemmbacke durchsetzende Führungsstrukturen zum axialen Führen des Umformwerkzeugs auf. Die jeweilige Führungsstruktur ist dazu ausgebildet, zumindest zwei, vorzugsweise genau zwei, benachbarte Verbindungsmittel eines Verbinders derart aufzunehmen, dass bei einem axialen Verschieben des Umformwerkzeugs in Richtung der ersten Klemmbacke das Umformwerkzeug die beiden Verbindungsmittel endseitig kontaktiert.

Mit einer derartigen Vorrichtung ist die Herstellung der erfindungsgemäßen Verbindung in besonders einfacher Art und Weise möglich. Insbesondere können aufgrund der Gestaltung der Führungsstruktur und des Umformwerkzeugs in einfacher Art und Weise zumindest zwei Verbindungsmittel gleichzeitig in die beiden Verbindungsabschnitte und den gegenüberliegenden Grundkörperabschnitt eingetrieben und endseitig umgeformt werden, zwecks Herstellens der Verbindung. Ferner ermöglicht die Vorrichtung die Anordnung mehrerer Verbinder, vorzugsweise aller Verbinder der Verbindung in einem Schritt.

Vorzugsweise ist die Führungsstruktur durch eine Durchgangsöffnung mit kreisrundem Querschnitt gebildet.

Vorzugsweise weist die zweite Klemmbacke der zwei Klemmbacken Lagerstrukturen zum Lagern der ersten Grundkörperabschnitte auf. Bei den Lagerstrukturen kann es sich beispielsweise um Lagermittel handeln, die in korrespondierende Ausnehmung des jeweiligen Grundkörperabschnitts eingreifen, oder die Lagerstrukturen weisen entsprechende Lagermittel auf.

Vorzugsweise weist das Umformwerkzeug endseitig einen in axialer Richtung hervorstehenden, umlaufenden Vorsprung auf, der eine Umformstruktur bildet. Dadurch ist die Bildung eines Schließkopfes erleichtert. Ferner ist bei einem umlaufenden Vorsprung die Handhabung erleichtert, da eine genaue rotatorische Ausrichtung des Umformwerkzeug nicht notwendig ist.

Die Vorrichtung ist insbesondere bei Verwendung eines Verbinders von Vorteil, bei dem der erste Grundkörperabschnitt bereits mit den Verbindungsmitteln bestückt ist und der zweite Grundkörperabschnitt ein separates Teil bildet.

In einer bevorzugten Ausführungsform weist die Vorrichtung mehrere in der ersten Klemmbacke angeordnete Umformstrukturen auf, wobei die Umformstrukturen dem Umformen der Verbindungsmittel an einem der ersten Klemmbacke abgewandten Ende des Verbindungsmittels dienen. Die Umformstrukturen sind vorzugsweise in Art eines Dorns ausgebildet.

Vorzugsweise sind die Umformstruktur des Umformwerkzeugs und die in der ersten Klemmbacke angeordneten Umformstrukturen unterschiedlich gestaltet. Dadurch wird die Bildung von endseitigen Schließköpfen bei gleichzeitigem Einwirken der Umformstrukturen auf die gegenüberliegenden Enden des Verbindungsmittels begünstigt.

In den nachfolgenden Figuren wird die Erfindung anhand von Ausführungsbeispielen näher erläutert, ohne hierauf beschränkt zu sein.

Es zeigen:
- Fig. 1: einen erfindungsgemäßen Verbinder in einem Zustand, bei dem ein erster Grundkörperabschnitt und ein zweiter Grundkörperabschnitt des Verbinders mittels Verbindungsmitteln miteinander verbunden sind, in einer perspektivischen Ansicht,
- Fig. 2: einen Ausschnitt eines Gurts mit einer erfindungsgemäßen Verbindung von Gurtenden, in einer perspektivischen Ansicht,
- Fig. 3: der Gurtabschnitt gemäß Fig. 2 in einer Ansicht in Längsrichtung des Gurts,
- Fig. 4: der Gurtabschnitt gemäß Fig. 2 in einer Draufsicht,
- Fig. 5: der Gurtabschnitt gemäß Fig. 2 in einer Ansicht in Querrichtung des Gurts,
- Fig. 6: der Gurtabschnitt gemäß Fig. 2 vor dem Herstellen der Verbindung, in einer Ansicht in Querrichtung des Gurts,
- Fig. 7: eines der Gurtenden gemäß Fig. 6 in einer perspektivischen Ansicht,
- Fig. 8: der Verbinder gemäß Fig. 1 in einem Zustand vor dem Herstellen der Verbindung,
- Fig. 9: eine Vorrichtung zum Herstellen der Verbindung gemäß Fig. 2 in einer Schnittansicht,

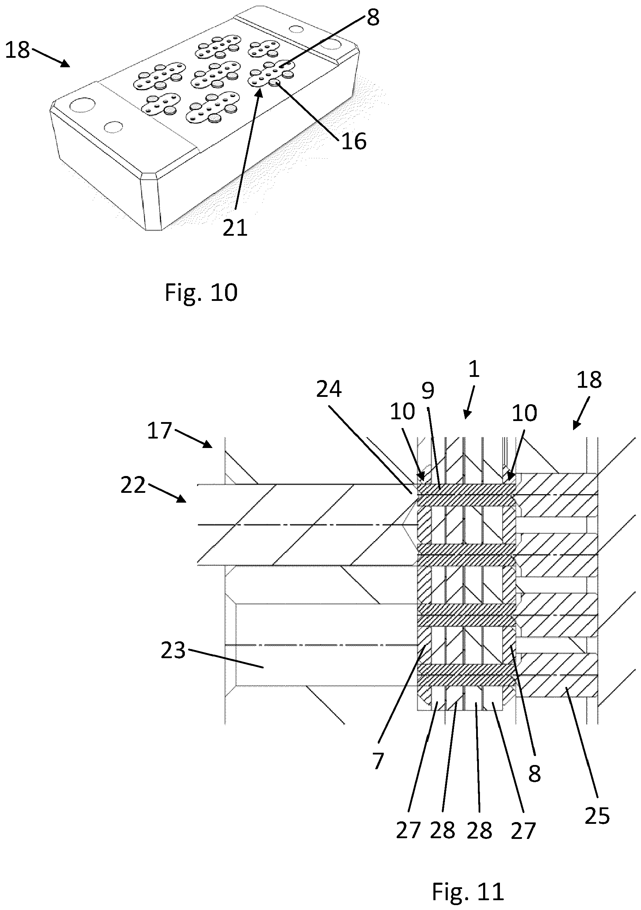

- Fig. 10: eine erste Klemmbacke der Vorrichtung gemäß Fig. 9 in einer perspektivischen Ansicht,
- Fig. 11: ein Teilbereich der Fig. 9.

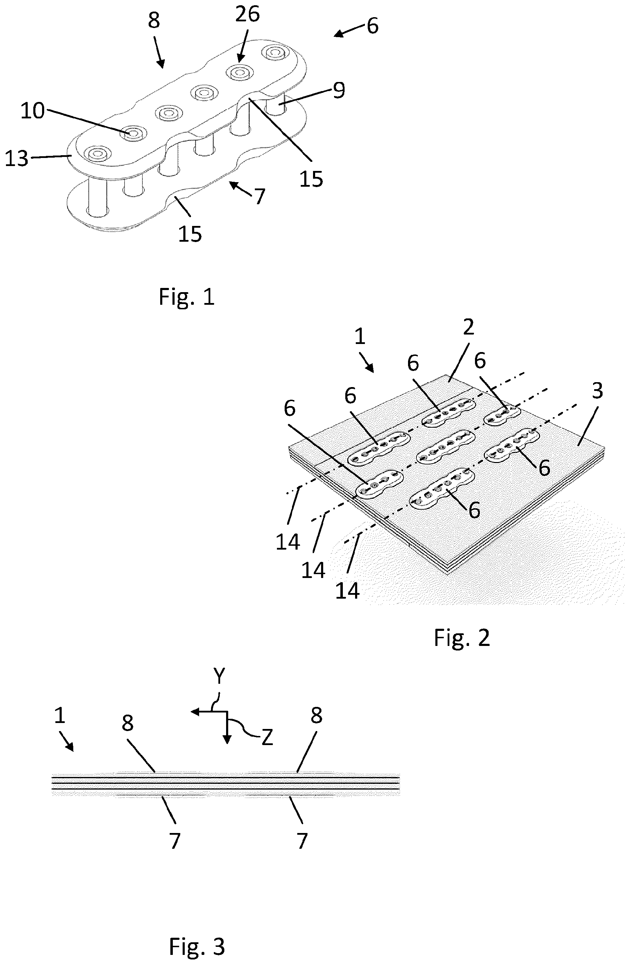

Die Fig. 2 zeigt eine Verbindung zweier Enden 2, 3 eines Gurts 1, vorliegend eines Mehrlagenfördergurts mit drei Zugträgern in Form von Textillagen 12 auf, wobei zwischen den Textillagen 12 jeweils eine Zwischenlage 28 ausgebildet ist. Bei der Zwischenlage 28 kann es sich beispielsweise um eine Zwischengummierung handeln. Ferner weist der Gurt 1 eine erste äußere Deckschicht 27 und eine der ersten äußeren Deckschicht 27 gegenüberliegenden zweite äußere Deckschicht 27 auf.

Die Längsrichtung des Gurts 1 verläuft in Laufrichtung des Gurts 1, vorliegend in X-Richtung. Die Querrichtung des Gurts 1 verläuft in Y-Richtung. Die Dicke des Gurts 1 entspricht dessen Erstreckung in Z-Richtung. Die Breite des Gurts 1 entspricht dessen Erstreckung in Y-Richtung.

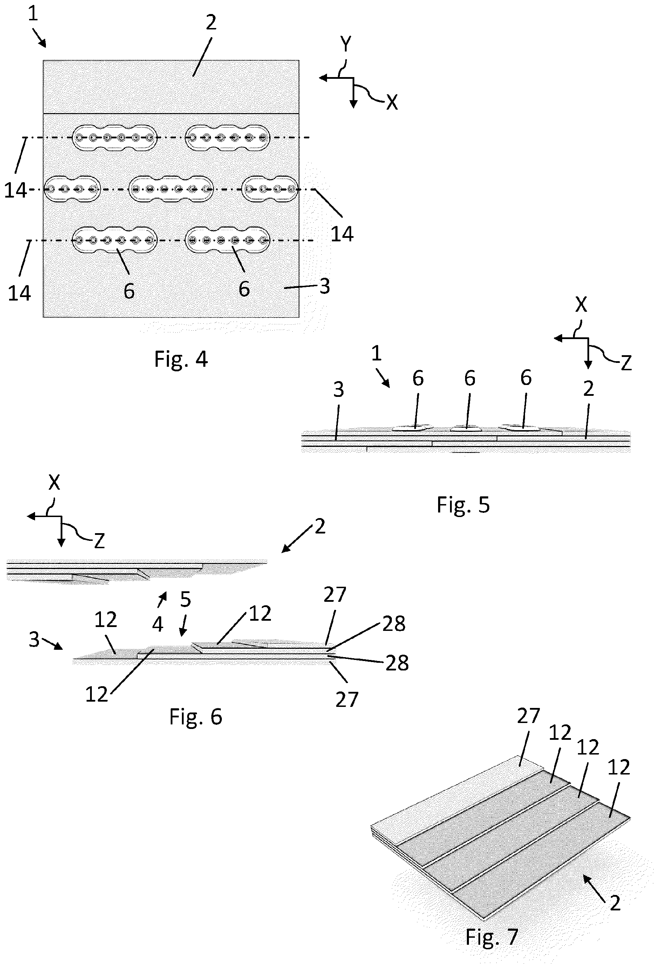

Ein erstes Ende 2 der zwei Enden 2, 3 weist einen ersten Verbindungsabschnitt 4 auf, der vorliegend stufenförmig ausgebildet ist. Ein zweites Ende 3 der zwei Enden 2, 3 weist einen zu dem ersten Verbindungsabschnitt 4 korrespondierenden zweiten stufenförmigen Verbindungsabschnitt 5 auf. Die stufenförmigen Verbindungsabschnitten 5 sind vorliegend derart gestaltet, dass jeweils die Textillage 12 freigelegt ist. Die beiden Verbindungsabschnitte 4, 5 sind in einem Überlappungsbereich in Z-Richtung überlappend angeordnet, sodass Textillage 12 an Textillage 12 anliegt, wie insbesondere aus den Fig. 5 und 6 hervorgeht. In dem Überlappungsbereich sind mehrere Verbinder 6 angeordnet, wobei vorliegend die Verbindung drei Reihen 14 von Verbindern 6 aufweist, wobei die Reihen 14 vorliegend parallel und in Querrichtung des Gurts 1 verlaufen. Stoßenden der Verbindungsabschnitte 4, 5 sind vorliegend mit einem Schrägungswinkel von 0° ausgebildet. Die Stoßenden verlaufen somit in Y-Richtung.

Der jeweilige Verbinder 6 durchsetzt mit Verbindungsmitteln 9 den ersten Verbindungsabschnitt 4 und den zweiten Verbindungsabschnitt 5. Der jeweilige Verbinder 6 weist einen ersten plattenförmigen Grundkörperabschnitt 7 und einen zweiten plattenförmigen Grundkörperabschnitt 8 auf. Die beiden Verbindungsabschnitte 4, 5 sind zwischen den beiden Grundkörperabschnitten 7, 8 angeordnet, wobei der jeweilige erste Grundkörperabschnitt 7 an der ersten äußeren Deckschicht 27 des Gurts 1 und der zweite Grundkörperabschnitt 8 an der zweiten äußeren Deckschicht 27 anliegt.

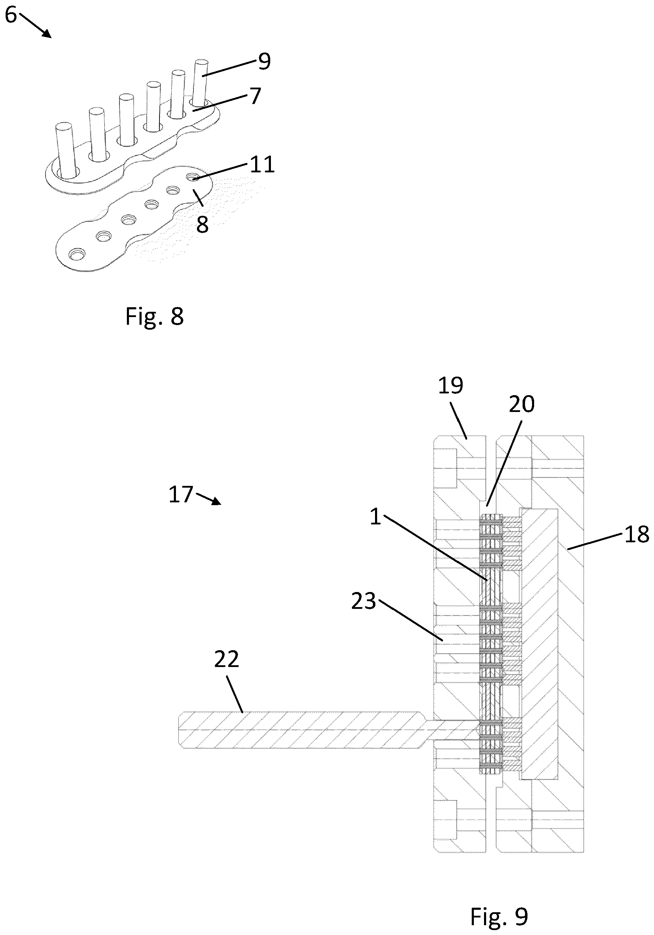

Die Verbindungsmittel 9 sind in dem ersten und dem zweiten Grundkörperabschnitt 7, 8 gehalten, wobei, zwecks Haltens der Verbindungsmittel 9 in dem jeweiligen Grundkörperabschnitt 7, 8, das jeweilige Verbindungsmittel 9 einen durch Materialumformung ausgebildeten Schließkopf 10 aufweist. Die Fig. 8 zeigt die Verbindungsmittel 9 in einem Zustand vor der Ausbildung des Schließkopfes 10. Die Fig. 1 zeigt die Verbindungsmittel 9 nach Ausbildung des Schließkopfes 10.

Der jeweilige Verbinder 6 weist vorliegend eine einzige Reihe von Verbindungsmitteln 9 auf, wobei die Verbindungsmittel 9 entlang einer Geraden angeordnet sind, nämlich entlang einer in Längsrichtung des jeweiligen Verbinders 6 verlaufenden Geraden.

Vorliegend sind die Verbindungsmittel 9 in Art eines Bolzens ausgebildet, wobei der Bolzen als Vollzylinder mit kreisförmiger Grundfläche ausgebildet ist.

Vorliegend weist der jeweilige Grundkörperabschnitt 7, 8 eine Materialstärke von 1,5 mm auf. Die in der Figur 1 dargestellten Grundkörperabschnitte weisen eine Längserstreckung von etwa 10 cm auf. Vorliegend weist der jeweilige Bolzen einen Durchmesser von 2 mm und eine Länge von 3 cm auf.

Endseitig kann das Verbindungsmittel 9, beispielsweise mittels eines Spreizdorns, umgeformt werden zwecks Bildung des Schließkopfes 10 mit einem gegenüber dem in axialer Richtung angrenzenden Bereich des Verbindungsmittels 9 erweitertem Durchmesser. Beispielsweise weist der Schließkopf 10 bei einem Bolzen mit 2 mm Durchmesser einen Durchmesser von 2,4 mm auf.

Zwecks Aufnahme des Schließkopfes 10 weist der jeweilige Grundkörperabschnitt 7, 8 einen Rücksprung 26 auf. Der Rücksprung 26 weist eine Tiefe von etwa 0,2 mm auf.

Wie insbesondere der Fig. 1 zu entnehmen ist, weist der jeweilige Grundkörperabschnitt 7, 8 eine umlaufend abgeschrägte Auflaufkante 13 auf. Diese Auflaufkante 13 erleichtert beispielsweise eine beschädigungsfreie Kontaktierung mit einer Umlenkrolle für den Gurt 1.

Ferner weist der jeweilige Grundkörperabschnitt 7, 8 im Bereich der umlaufenden Auflaufkante 13 mehrere gegenüberliegende Ausnehmungen 15 auf.

Die Fig. 8 zeigt einen erfindungsgemäßen Verbinder 6 vor dessen Einbringen in die Verbindungsabschnitte 4, 5 des Gurts 1. Der Grundkörperabschnitt 7 weist Lageröffnungen auf, wobei das jeweilige Verbindungsmittel 9 kraftschlüssig in einer der Lageröffnungen gelagert ist. Die Verbindungsmittel 9 sind dabei auf einer dem zweiten Grundkörperabschnitt 8 abzuwendenden Seite des Grundkörperabschnitts 7 hervorstehend angeordnet.

Zwecks Herstellens der Verbindung zwischen den beiden Grundkörperabschnitten 7, 8 mittels der Verbindungsmittel 9 werden die Verbindungsmittel 9 in Richtung des zweiten Grundkörperabschnitts 8 durch den ersten Grundkörperabschnitt 7 hindurchgetrieben. In dem in der Fig. 8 dargestellten Anordnung wären zwecks Herstellung der erfindungsgemäßen Verbindung die beiden überlappenden Verbindungsabschnitte 4, 5 des Gurts 1 in dem freien Zwischenbereich zwischen den beiden Grundkörperabschnitten 7, 8 anzuordnen und anschließend die Verbindungsmittel 6 in Richtung des zweiten Grundkörperabschnitts 8 durch die beiden Verbindungsabschnitte 4, 5 hindurchzutreiben und die Verbindungsmitteln 6 endseitig umzuformen zwecks Bildung des Schließkopfes 10.

Das Herstellen der Verbindung erfolgt vorteilhafterweise mit der in der Fig. 9 dargestellten Vorrichtung 17. Die Vorrichtung 17 weist zu diesem Zweck zwei zueinander bewegbare Klemmbacken 18, 19 auf. Zwischen den beiden Klemmbacken 18, 19 ist ein Aufnahmebereich 20 zur klemmenden Aufnahme der Verbindungsabschnitte 4, 5 im Überlappungsbereich der Verbindungsabschnitte 4, 5, sowie der Verbinder 6 ausgebildet.

Eine erste Klemmbacke 18 der zwei Klemmbacken 18, 19 weist mehrere, vorliegend sieben, Lagerstrukturen 21 zum Lagern der zweiten Grundkörperabschnitte 8 der Verbinder 6 auf. Die jeweilige Lagerstruktur 21 weist mehrere gegenüberliegende Lagermittel 16 auf, die zu den Ausnehmungen 15 der Grundkörperabschnitte 7, 8 korrespondieren.

Die Vorrichtung 17 weist ferner ein Umformwerkzeug 22 zum Umformen eines Endes der Verbindungsmittel 9 zwecks Bildung des Schließkopfes 10 auf. Eine zweite Klemmbacke 19 der zwei Klemmbacken 18, 19 weist mehrere die Klemmbacke 19 durchsetzende Führungsstrukturen 23, die durch eine Durchgangsöffnung mit kreisrundem Querschnitt gebildet ist, auf, wobei die jeweilige Führungsstruktur 23 zum axialen Führen des Umformwerkzeugs 22 dient. Das Umformwerkzeug 22 weist endseitig einen in axialer Richtung hervorstehenden, umlaufenden Vorsprung 24 auf, wobei die jeweilige Führungsstruktur 23 dazu ausgebildet ist, zwei benachbarte Verbindungsmittel 9 eines Verbinders 6 derart aufzunehmen, dass bei einem Anordnen des Umformwerkzeugs 22 in der jeweiligen Führungsstruktur 23 und axialem Verschieben des Umformwerkzeugs 22 bezüglich der Führungsstruktur 23 in Richtung der ersten Klemmbacke 18 der umlaufende Vorsprung 24 die beiden Verbindungsmittel 9 endseitig kontaktiert. Bei einer derartigen Gestaltung ist es besonders einfach möglich, mittels des Umformwerkzeugs 22 zwei Verbindungsmittel 9 gleichzeitig in die Verbindungsabschnitte 4, 5 der Gurtenden 2, 3 einzutreiben und den jeweiligen Schließkopf 10 herzustellen. Vorzugsweise kontaktieren die zwei Verbindungsmittel 9 vor dem Eintreiben und/oder während des Eintreibens eine die die Durchgangsöffnung umlaufend umschließende Wandung. Das Eintreiben und Umformen der Verbindungsmittel 9 mittels des Umformwerkzeugs 22 erfolgt vorzugsweise händisch, insbesondere unter Verwendung eines Hammers.

Um das Herstellen der Verbindung weiter zu erleichtern, weist die Vorrichtung 17 mehrere in der ersten Klemmbacke 18 ortsfest gelagerte Umformstrukturen 25 auf, die dem Umformen des dem Umformwerkzeug 22 abgewandten Endes des jeweiligen Verbindungsmittels 9 dienen, zwecks Herstellens des Schließkopfes 10. Die Umformstruktur 25 ist in Art eines Dorns ausgebildet. Beim Eintreiben der Verbindungsmittel 9 werden bei einer solchen Gestaltung in einem Schritt an dem jeweiligen Verbindungsmittel 9 die beiden gegenüberliegenden Schließköpfe 10 ausgebildet.

Nach dem Eintreiben der in der jeweiligen Führungsstruktur 23 angeordneten Verbindungsmittel 9 kann das Umformwerkzeug 22 in eine der übrigen Führungsstrukturen 23 eingebracht und die dortigen Verbindungsmittel 9 eingetrieben werden bis sämtliche Verbindungsmittel 9 eingetrieben sind.

Die gegenüberliegenden Schließköpfe 10 des Verbindungsmittels 9 sind aufgrund der unterschiedlichen Gestaltung der endseitig einwirkenden Strukturen 24, 25, nämlich als Dorn ausgebildete Umformstruktur 25 und umlaufender Vorsprung 24, unterschiedlich ausgebildet. Während sich bei Einwirken des Dorns ein Schließkopf 10 mit einer zentralen Vertiefung und einem die Vertiefung umlaufend umschließenden radialen Vorsprung ausbildet, bildet sich auf der abgewandten Seite ein Schließkopf 10 mit einer kreisbogenförmigen Vertiefung und beidseitig der kreisbogenförmigen Vertiefung angrenzenden im Wesentlichen kreisbogenförmigen radialen Vorsprüngen.

### Bezugszeichenliste

- 1: Gurt
- 2: erstes Ende
- 3: zweites Ende
- 4: erster Verbindungsabschnitt
- 5: zweiter Verbindungsabschnitt
- 6: Verbinder
- 7: erster Grundkörperabschnitt
- 8: zweiter Grundkörperabschnitt
- 9: Verbindungsmittel
- 10: Schließkopf
- 11: Aufnahmeöffnung
- 12: Textillage
- 13: Auflaufkante
- 14: Reihe
- 15: Ausnehmung
- 16: Lagermittel
- 17: Vorrichtung
- 18: erste Klemmbacke
- 19: zweite Klemmbacke
- 20: Aufnahmebereich
- 21: Lagerstruktur
- 22: Umformwerkzeug
- 23: Führungsstruktur
- 24: Vorsprung
- 25: Umformstruktur
- 26: Rücksprung
- 27: Deckschicht
- 28: Zwischenlage

## Patentansprüche

1. Verbindung zweier Enden (2, 3) eines Gurts (1), insbesondere eines Fördergurts, oder eines Endes (2) eines Gurts (1) und eines Endes (2) eines anderen Gurts (1), insbesondere der Enden (2,3) zweier Fördergurte, wobei ein erstes Ende (2) der zwei Enden (2, 3) einen stufenförmigen und/oder keilförmigen ersten Verbindungsabschnitt (4) und ein zweites Ende (3) der zwei Enden (2, 3) einen zu dem ersten Verbindungsabschnitt (4) korrespondierenden stufenförmigen und/oder keilförmigen zweiten Verbindungsabschnitt (5) aufweist, wobei die zwei Verbindungsabschnitte (4, 5) in einem Überlappungsbereich überlappend angeordnet sind, wobei in dem Überlappungsbereich mehrere Verbinder (6) angeordnet sind, wobei der jeweilige Verbinder (6) den ersten Verbindungsabschnitt (4) und den zweiten Verbindungsabschnitt (5) durchsetzt, wobei der jeweilige Verbinder (6) einen ersten Grundkörperabschnitt (7) und einen zweiten Grundkörperabschnitt (8) aufweist, wobei die beiden Verbindungsabschnitte (4, 5) zwischen den beiden Grundkörperabschnitten (7, 8) angeordnet sind, wobei der jeweilige Verbinder (6) zumindest zwei Verbindungsmittel (9) aufweist, wobei die zumindest zwei Verbindungsmittel (9) in dem ersten und dem zweiten Grundkörperabschnitt (7, 8) gehalten sind und den ersten und den zweiten Verbindungsabschnitt (4, 5) durchsetzen.

2. Verbindung nach Anspruch 1, wobei das Verbindungsmittel (9) formschlüssig in zumindest einem der Grundkörperabschnitte (7, 8) gehalten ist, vorzugsweise das Verbindungsmittel (9) formschlüssig in dem jeweiligen Grundkörperabschnitt (7, 8) gehalten ist.

3. Verbindung nach Anspruch 2, wobei das Verbindungsmittel (9) durch eine Materialumformung des Verbindungsmittels (9) in zumindest einem der Grundkörperabschnitte (7, 8) gehalten ist, vorzugsweise durch eine erste Materialumformung in dem ersten Grundkörperabschnitt (7) und durch eine zweite Materialumformung in dem zweiten Grundkörperabschnitt (8) gehalten ist, vorzugsweise das Verbindungsmittel als Niet oder Bolzen ausgebildet ist.

4. Verbindung nach einem der Ansprüche 1 bis 3, wobei das Verbindungsmittel (9) ein Gewinde aufweist und zumindest einer, vorzugsweise genau einer, der Grundkörperabschnitte (7, 8) ein zu dem Gewinde korrespondierendes Gegengewinde aufweist, wobei das Verbindungsmittel (9) in das Gegengewinde des Grundkörperabschnitts (7, 8) eingeschraubt ist.

5. Verbindung nach einem der Ansprüche 1 bis 4, wobei der Gurt (1) mehrere Lagen aufweist, insbesondere der Gurt (1) als Mehrlagenfördergurt ausgebildet ist, bevorzugt der Gurt (1) zumindest eine Einlage und/oder einen Zugzwischenträger aufweist.

6. Verbindung nach einem der Ansprüche 1 bis 5, wobei im Überlappungsbereich zwischen den Verbindungsabschnitten (4, 5) kein Stoffschluss vorliegt.

7. Verbindung nach einem der Ansprüche 1 bis 6, wobei die Verbindung zumindest zwei Reihen (14) von Verbindern (6), vorzugsweise zumindest zwei parallele Reihen (14) von Verbindern (6), aufweist, wobei die jeweilige Reihe (14) zumindest zwei Verbinder (6) aufweist.

8. Verbindung nach einem der Ansprüche 1 bis 7, wobei zumindest einer der Grundkörperabschnitte (7, 8), insbesondere beide Grundkörperabschnitte (7, 8), im Bereich einer umlaufenden Kante zumindest zwei Ausnehmungen (15), vorzugsweise zwei bezüglich der Verbindungsmittel (9) gegenüberliegende Ausnehmungen (15), zur Aufnahme von Lagermitteln (16) zum Lagern des Grundkörperabschnitts (7, 8) aufweist.

9. Verbindung nach einem der Ansprüche 1 bis 8, wobei die Grundkörperabschnitte (7, 8) plattenförmig ausgebildet sind und insbesondere zumindest einer der Grundkörperabschnitte (7, 8) eine Auflaufkante (13) aufweist.

10. Verbindung nach einem der Ansprüche 1 bis 9, wobei das Verbindungsmittel (9) an seinen beiden Enden jeweils einen Schließkopf (10) aufweist, vorzugsweise der jeweilige Grundkörperabschnitt (7, 8) einen Rücksprung (26) zur Aufnahme des jeweiligen Schließkopfes (10) aufweist.

11. Verbinder (6) zur Herstellung einer Verbindung nach einem der Ansprüche 1 bis 10.

12. Verbinder nach Anspruch 11, wobei der Verbinder (6) einen ersten Grundkörperabschnitt (7) und einen zweiten Grundkörperabschnitt (8) aufweist, wobei die beiden Verbindungsabschnitte (4, 5) der zu verbindenden Enden (2, 3) zwischen den beiden Grundkörperabschnitten (7, 8) überlappend anordenbar sind, wobei der Verbinder (6) zumindest zwei Verbindungsmittel (9) aufweist, wobei die zumindest zwei Verbindungsmittel (9) in dem ersten Grundkörperabschnitt (7) gelagert sind, wobei die Verbindungsmittel (9) unter Durchsetzen der zwischen den beiden Grundkörperabschnitten (7, 8) anordenbaren Verbindungsabschnitte (4, 5) mit dem zweiten Grundkörperabschnitt (8) verbindbar sind, insbesondere der erste Grundkörperabschnitt (7) Lageröffnungen aufweist, wobei das jeweilige Verbindungmittel (9) kraftschlüssig in einer der Lageröffnungen gelagert ist.

13. Verbinder nach Anspruch 11 oder 12, wobei der zweite Grundkörperabschnitt (8) Aufnahmeöffnungen (11) zum Aufnehmen der Verbindungsmittel (9) aufweist, bevorzugt sich die Aufnahmeöffnung (11) in Richtung des ersten Grundkörperabschnitts (7) erweitert, insbesondere konisch erweitert.

14. Verbinder nach einem der Ansprüche 11 bis 13, wobei der erste Grundkörperabschnitt (7) und der zweite Grundkörperabschnitt (8) identisch ausgebildet sind.

15. Vorrichtung (17) zur Herstellung einer Verbindung nach einem der Ansprüche 1 bis 10, wobei die Vorrichtung (17) zueinander bewegbare Klemmbacken (18, 19) aufweist, wobei zwischen den Klemmbacken (18, 19) ein Aufnahmebereich (20) zur klemmenden Aufnahme der Verbindungsabschnitte (4, 5) im Überlappungsbereich der Verbindungsabschnitte (4, 5) ausgebildet ist, wobei eine erste Klemmbacke (18) der zwei Klemmbacken (18, 19) Lagerstrukturen (21) zum Lagern der zweiten Grundkörperabschnitte (8) aufweist, wobei die Vorrichtung (17) ein Umformwerkzeug (22) zum Umformen eines Endes der Verbindungsmittel (9) aufweist, wobei eine zweite Klemmback (19) der zwei Klemmbacken (18, 19) zumindest eine die Klemmbacke durchsetzende Führungsstruktur (23) aufweist, zum axialen Führen des Umformwerkzeugs (22), vorzugsweise das Umformwerkzeug (22) endseitig einen in axialer Richtung hervorstehenden, umlaufenden Vorsprung (24) aufweist, wobei die Führungsstruktur (23) dazu ausgebildet ist, zwei benachbarte Verbindungsmittel (9) eines Verbinders (6) derart aufzunehmen, dass bei einem axialen Verschieben des Umformwerkzeugs (22) in Richtung der ersten Klemmbacke (18) das Umformwerkzeug (22) die beiden Verbindungsmittel (9) endseitig kontaktiert.
